# EUROPEAN PATENT APPLICATION

(11) **EP 1 935 812 A1**
(43) Date of publication of application: **25.06.2008**
(21) Application number: 06126545.0
(22) Date of filing: 19.12.2006
(51) Int. Cl.: B65G 35/06, B61B 13/12, E01B 25/26

(54) **Buffering arrangement for an overhead conveyor system**

(71) Applicant: OCS Overhead Conveyor System Aktiebolag, 504 94 Borås (SE)
(72) Inventor: Lundgren, Christer, 182 46 Enebyberg (SE)
(74) Representative: Edlund, Fabian

(57) **Abstract**

A buffering arrangement for an overhead conveyor system comprising a twin-track buffering zone having a first track (2a) and a second track (2b) extending along each other, and an intersection (15) with a guide (16) for guiding one carriage (7a) of each conveyor unit (14) onto said first track (2a) and another carriage (7b) of each conveyor unit (14) onto said second track (2b). The twin-track buffering zone includes a first straight segment (17), and a first curved segment (19) wherein said first track (2a) forms an outer curve and said second track (2b) forms an inner curve. Along the straight segment, a first drive element portion (18) is arranged to propel said front carriage (7a) along the first track (2a) with a buffering speed (B). Along the first curved conveyor segment (19) a second drive element portion (20) is arranged to propel said front carriage (7a) along the first track (2a) with an accelerated speed (C), greater than said buffering speed (B). With this arrangement, the buffering zone can include curved segments, and can therefore be more easily adapted to the space available for the buffering zone.

## Description

### Field of the invention

The present invention relates to a buffering arrangement for an overhead conveyor system of the type comprising a plurality of carriers each having two drive carriages arranged to be propelled along a track, each carrier being adapted to support a load suspended from the carrier.

### Background of the invention

One example of such an overhead conveyor system is described in WO 00/34161.

In this type of conveyor system, it is sometimes desirable to be able to "buffer" carriages, i.e. to let a succession of carriages be stopped, or at least slowed down, along a predetermined stretch of the track. This may be convenient, for instance, in front of a working station or before to an elevator. Prior art solutions, e.g. as described in WO 00/34161, enable disconnection of one or both drive carriages belonging to a succeeding carrier when it catches up with a slower, or even stationary, preceding carrier.

A particular problem in this type of system is caused by the fact that each carrier has two drive carriages in series along the same track. The distance between these carriages is fixed by the construction of the carrier, and possibly also by the load suspended from the carrier. This means that each carrier requires a minimum distance of the track, and a group of carriers collected in a buffering arrangement will therefore require a significant amount of space.

Further, it may be difficult to design the conveyor system to allow for a straight stretch of track sufficiently long to accommodate the required number of carriers.

In other overhead conveyor systems, it has been attempted to buffer twin-carriage conveyors in twin-track zones, where one carriage runs along one track, and the other runs along another track. However, such twin-track zones are difficult to adapt to existing space and geometry.

### Summary of the invention

It is an object of the present invention to mitigate the above problems, and to provide a buffering arrangement for an overhead conveyor system that provides an improved buffering of conveyor units with two drive carriages.

This and other problems are achieved by a buffering arrangement having a twin-track buffering zone including a first straight segment, a first curved segment, wherein the first track forms an outer curve and the second track forms an inner curve, a first drive element portion arranged along the first track in the first straight conveyor segment, the first drive element portion arranged to propel the front carriage along the first track with a buffering speed, thereby pulling the back carriage along the second track with the buffering speed, the buffering speed being lower than the conveyor speed, and a second drive element portion arranged along the first track in the first curved conveyor segment, the second drive element portion arranged to propel the front carriage along the first track with an accelerated speed, greater than the buffering speed, thereby pulling the back carriage along the inner curve with a speed no less than the buffering speed.

With this arrangement, the buffering zone can include curved segments, and can therefore be more easily adapted to the space available for the buffering zone. The front carriage is driven along the outer curve with an increased speed, so that the speed along the inner curve can be maintained, or even increased. This avoids a situation where carriages belonging to different conveyor units are brought into contact with each other in the curve, potentially jamming the conveyor units.

It may be sufficient to have a speed along the inner curve that is approximately equal to the buffering speed, as long as the curvature is not too great. Preferably, however, the speed along the inner curve is greater than the buffering speed, so that the curve acts as a transport segment rather than a buffering segment.

According to a preferred embodiment, the twin-track buffering zone further includes a second curved segment, wherein the first track forms an inner curve and the second track forms an outer curve, and a third drive element portion arranged along the second track in the second curved conveyor segment, the third drive element portion arranged to propel the back carriage along the second track with an accelerated speed, thereby pushing the front carriage along the first track with a speed no less than the buffering speed.

This second curve makes it possible to even further adapt the buffering zone to the available space, as no the twin-track zone can extend back and forth, in a zig-zag, or meander, pattern.

It is important to note that in such a zig-zag twin-track zone, the outer track of the first curve will become inner track in the second curve. In practice, it may be very difficult, or even impossible, to propel a conveyor unit through a twin-track curve by driving only on the inner curve. During the curve, the connecting beam may form a too great angle with the second track for the front carriage to be able to pull the back carriage forward. Therefore, according to this embodiment of the invention, the third drive element portion is arranged above the second (outer) track, so that drive is shifted to the back carriage, thus pushing the front carriage along the inner curve. Again, just as in the first curve, the carriage running along the outer curve is driven with an increased speed, so that the speed along the inner curve can be maintained, or even increased.

The twin-track buffering zone may further include a second straight segment connecting the first and second curved segments. Obviously, this further increases the buffering capacity of the buffering arrangement.

In this second straight segment, a fourth drive element portion can be arranged along the first track, so as to propel the front carriage along the first track with the buffering speed, thereby pulling the back carriage along the second track with the buffering speed. This means that the shift to driving the back carriage will take place upon entry of the second curve.

Alternatively, the fourth drive element portion can be arranged along the second track in the second straight segment, so as to propel the back carriage along the second track with the buffering speed, thereby pushing the front carriage along the first track with the buffering speed. This means that the shift to driving the back carriage takes place already when leaving the first curve.

In the twin-track buffering zone, each conveyor unit will extend transverse the conveyor direction, and form an angel with the conveyor direction defined by a relation between the distance between the tracks and the distance between the carriages. In order to achieve an efficient buffering, the angle must not be too small. However, at the same time, the angle must not be too close to 90 degrees, as it will then be difficult to propel the conveyor unit by driving only one of the carriages. Preferably, therefore, the distance between the tracks in the twin-track buffering zone is chosen such that the angle that the conveyor unit forms with the track is in the range 20-60 degrees, and most preferably around 35 degrees.

Preferable, the carriages are arranged to make frictional contact with the drive element, in order to transmit drive forces from the drive element to the carriages. It has been found that frictional drive is an advantageous way to drive twin-carriage conveyor units, as it relaxes the requirements on mechanical tolerances. More specifically, a certain slip can be allowed between the drive element and the carriages, thus allowing adjustment between the carriages.

One example of frictional drive is a system where the drive element, and also each of the drive element portions, are formed by an endless drive belt, flat or non-flat, with which the carriages are arranged to make contact with. Another is a system where the drive element, and also each of the drive element portions, are formed by rotating drive shafts, with which drive wheels on the carriages are arranged to roll against.

### Brief description of the drawings

This and other aspects of the present invention will now be described in more detail, with reference to the appended drawings showing a currently preferred embodiment of the invention.
Figure 1 is a perspective view of an intersection and a straight buffering segment according to an embodiment of the present invention.
Figure 2 is a perspective view of a first curved buffering segment according to an embodiment of the present invention.
Figure 3 is a perspective view of a second curved buffering segment according to an embodiment of the present invention.
Figure 4 is a schematic top view of a buffering arrangement according to an embodiment of the present invention.

### Detailed description

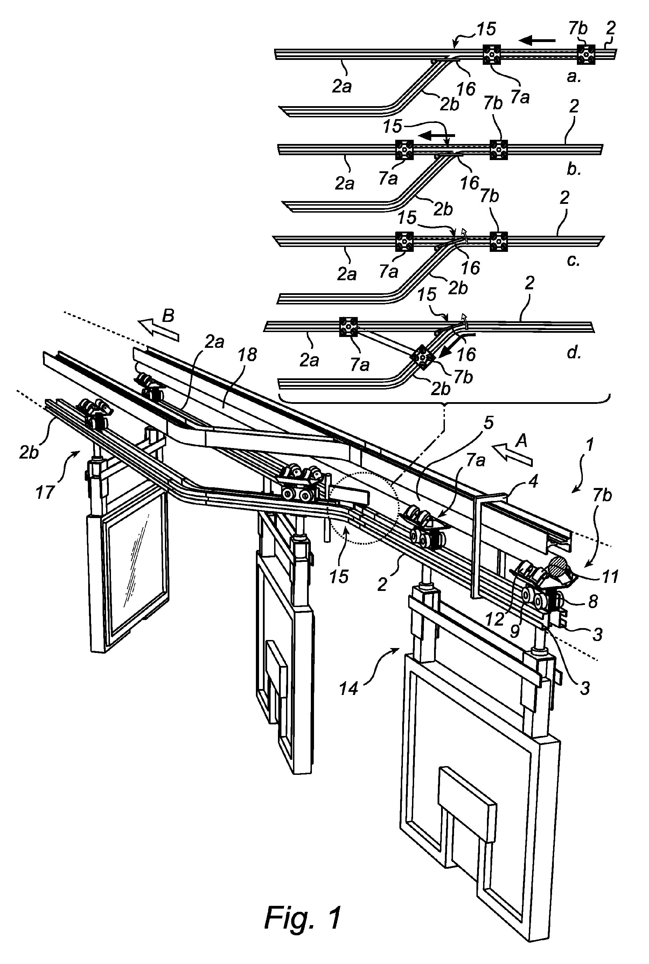

Figures 1-3 shows various portions of a buffering arrangement according to an embodiment of the invention, suitable for an overhead conveyor system of the type disclosed in WO 00/34161, herewith incorporated by reference.

The illustrated overhead conveyor system 1 comprises a track 2 consisting of two parallel rails 3. Each rail 3 here consists of a hollow metal profile with an open rectangular cross-section. Above the track 2 and extending along the track is a rotatable drive shaft 5, which is drivable with the aid of means (not shown) adapted thereto, such as a belt connected to an electric motor. The track 2 and shaft 5 are suspended by yokes 4 which are arranged on the outsides of the track elements 1 at suitable distances from each other. These yokes 4 are responsible for suspending the overhead conveyor system 1.

A plurality of carriages 7 are movable along the track 2. The carriages 7 rest on the track 2, and are thus positioned between the track 2 and the drive shaft 5. Each carriage here comprises a body 8 and four wheels 9, adapted to run on the track elements 3. On the upper side of the carriage body 8 is arranged a drive unit 11, comprising at least one, in the illustrated example four, drive wheel 12, which is inclined relative to the axial extension of the drive shaft 5. The drive wheel is adapted to be pressed upwards, towards the drive shaft, by spring action. All wheels are rotatable in suitably parallel planes, i.e. all drive wheels 12 are preferably inclined relative to the drive shaft at the same angle. The dimensions of the drive unit 11 and the distance between the track 2 and the drive shaft 5 are such that, when a carriage 7 is positioned under the drive shaft 5, the drive wheels 12 are brought into contact with the circumferential surface of the drive shaft 5. Due to the friction between the wheels 12 and the shaft 5, the carriage will be propelled along the track 2 during rotation of the drive shaft 5 with a conveying speed A.

Two carriages 7 are connected to each other by means of a beam 13, to form a conveyor unit 14 having a front carriage 7a and a back carriage 7b.

The track 2 in figure 1 connects to a Y-intersection 15 (or branch), where the track 2 is split up into a first and a second track 2a, 2b. As shown in the partial enlargement of figure 1, the intersection 15 comprises a switchable guide track 16, for guiding a carriage 7 passing the intersection 15 onto the first or the second track 2a, 2b. The twin-track zone constitutes a buffering zone, where conveyor units 14 can be buffered in a transverse position across the conveying direction, with one drive carriage 7a on one of the tracks 2a, and the other drive carriage 7b on the other track 2b. This allows for space efficient buffering.

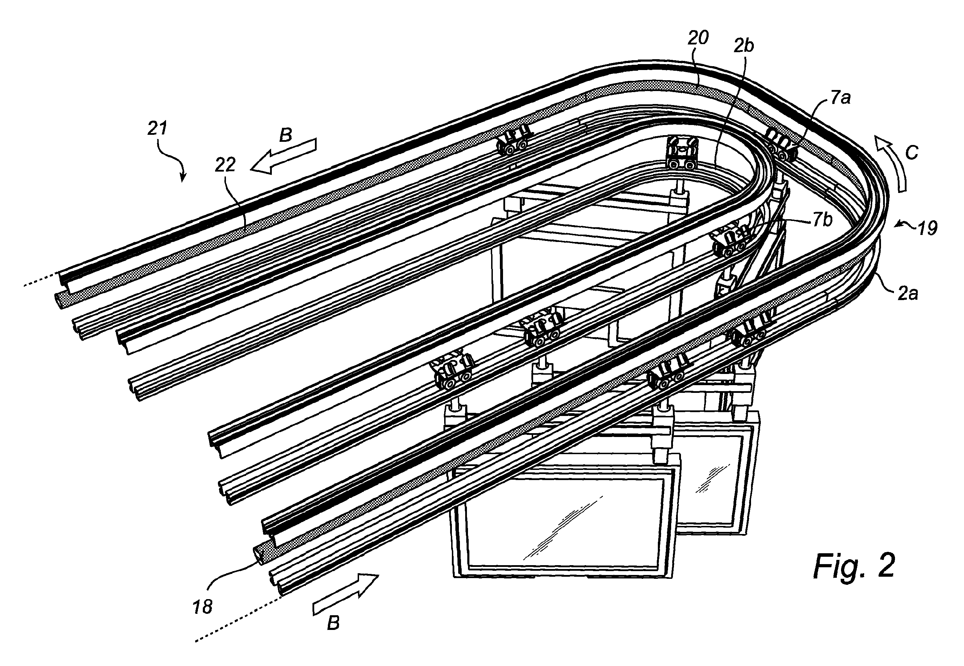

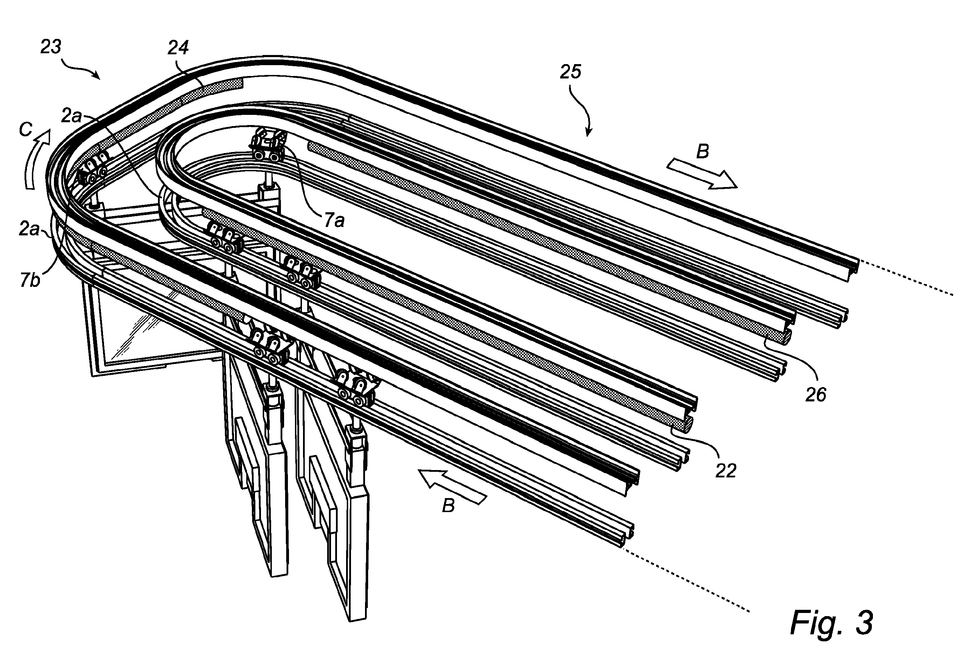

The buffering zone comprises several segments, which will be described in the following. In a first segment 17, the tracks 2a, 2b are straight and essentially parallel. Curved buffering segments 19, 23 will be described below, with reference to figures 2 and 3.

The drive shaft 5 extends above the track 2 before the intersection 15. Another drive shaft 18 extends above the first track 2a after the intersection 15. The drive shaft 18 is arranged to propel carriages with a lower buffering speed B than the conveying speed A. For example, the drive shaft 18 can rotate with a slower speed, or can have a smaller diameter. There is no drive shaft above the second track 2b after the intersection 15. Instead, the carriage propelled along the first track 2a will push/pull the entire conveyor unit 14 along the buffering segment.

With reference to the enlargement of figure 1 will be described how a conveyor unit enters the straight buffering segment 17 in four stages (a-d).

In stage (a) both carriages 7a, 7b are propelled by the drive shaft 5 towards the intersection 15. The guide track 16 is in a first position, connecting the track 2 and the first track branch 2a.

In stage (b), the front carriage 7a has entered the first track branch 2a, and is propelled by the drive shaft 18. As the back carriage is still propelled with the higher conveying speed, one of the two carriages will slide against the drive shaft 5 or 18, but the conveyor unit 14 will be propelled with at least the lower buffering speed into the buffering segment 17.

In stage (c), the guide track 16 is switched to connect the track 2 with the second track branch 2b.

In stage (d), the back carriage has been guided by the guide track 16 into the second track branch 2b. As this track branch 2b is not provided with any drive shaft, the conveyor unit is now propelled only by the front carriage 7a, and the back carriage 7b is pulled along.

Figure 2 shows a first curved segment 19 of a buffering arrangement according to an embodiment of the present invention.

In this segment, the first track 2a forms the outer curve, and the second track 2b forms the inner curve. A curved drive shaft 20, formed in a flexible material, is arranged above the first track 2a, to provide traction along the outer curve. No drive shaft is arranged above the second track 2b.

As the front carriage 7a, running on the first track 2a, will need to travel a longer distance than the back carriage 7b, running on the second track 2b, its speed must be increased if the inner carriage is to maintain the buffering speed B. The drive shaft 20 is therefore adapted to propel the front carriage with a speed C greater than the buffering speed B. The exact relationship between the speeds B and C depends on the distance between the tracks 2a and 2b and the curvature of the curve.

After the curved segment 19, there is another straight segment 21. Again, only one of the tracks 2a, 2b is provided with a drive shaft 22. In principle, the drive shaft 22 may be located above either one of the tracks 2a, 2b. However, in the illustrated example, the drive shaft 22 is arranged above the first track 2a, so as to form a continuation of the curved drive shaft 20.

As the conveyor unit 14 leaves the curve, the speed of the front carriage 7a can again be reduced, and the drive shaft 22 is adapted to propel the carriage 7a with the buffering speed B. The transitions between the drive shaft 18 and the curved drive shaft 20, and between the curved drive shaft 20 and the drive shaft 22 are chosen so as to minimize discontinuities in the forward drive..

In practice, it is often preferred to adapt the speed C of the front carriage so that the back carriage runs with a speed greater than the buffering speed B. The increased speed may be required to distance the carriages from each other along the curve, so as to avoid contact and possible jamming. When the speed along the inner curve is greater than the buffering speed, the curve segment will thus act as a transportation segment between the straight buffering segments 17 and 21.

Figure 3 shows a second curved segment 23, following the straight segment 21. In this curve, the first track 2a forms the inner curve, while the second track 2b forms the outer curve. Again, a curved drive shaft 24 is arranged along the outer curve, this time above the second track 2b.

In the illustrated example, the conveyor unit 14 is propelled by the front carriage 7a, running along the first track 2a, when approaching this curve. However, the curvature of the first track here makes it impossible for the front carriage 7a to pull the back carriage 7b around the curve. During the curve, the connecting beam 13 will form a too great angle with the second track 2b for the front carriage 7a to be able to pull the back carriage 7b forward. Therefore, the drive shaft 24 is arranged above the second track 2b, so that drive is shifted to the back carriage.

When the back carriage 7b is propelled by the drive shaft 24 along the outer curve, it will push the front carriage 7a around the inner curve. Just as in the first curve, the speed of the carriage 7b running along the outer curve needs to be increased. The drive shaft 24 is therefore adapted to propel the back carriage 7b with the increased speed C.

As indicated in figure 3, the drive shaft 22 and the curved drive shaft 24 preferably overlap slightly, in order to maintain traction of the conveyor unit at all times. When the first carriage 7a is brought out of contact with the drive shaft 22, the back carriage 7b should have entered the curved drive shaft 24. The beginning of the curved drive shaft is chosen such that the speed of the front carriage 7a, running along the inner curve, is maintained close to the buffering speed B.

The second curved segment 23 can be followed by a third straight segment 25, where again only one of the tracks 2a, 2b is provided with a drive shaft 22. In principle, the drive shaft 22 may be located above either one of the tracks 2a, 2b. However, it is preferred to revert to propelling the front carriage 7a, and therefore the drive shaft 26 is here arranged above the first track 2a. This means that the drive is again shifted, this time from the back carriage 7b to the front carriage 7a.

This time, the curved drive shaft 24 does not need to overlap the drive shaft 26. On the contrary, the drive shaft 24 can end as soon as the front carriage 7b has been brought into contact with the drive shaft 26. Due to the beam 13, this means that the end of drive shaft 24 can be separated from the beginning of the drive shaft 26.

In principle, the conveyor unit may be propelled by either carriage along a straight segment. However, it may be preferred to avoid shifting drive between the two tracks, if possible.

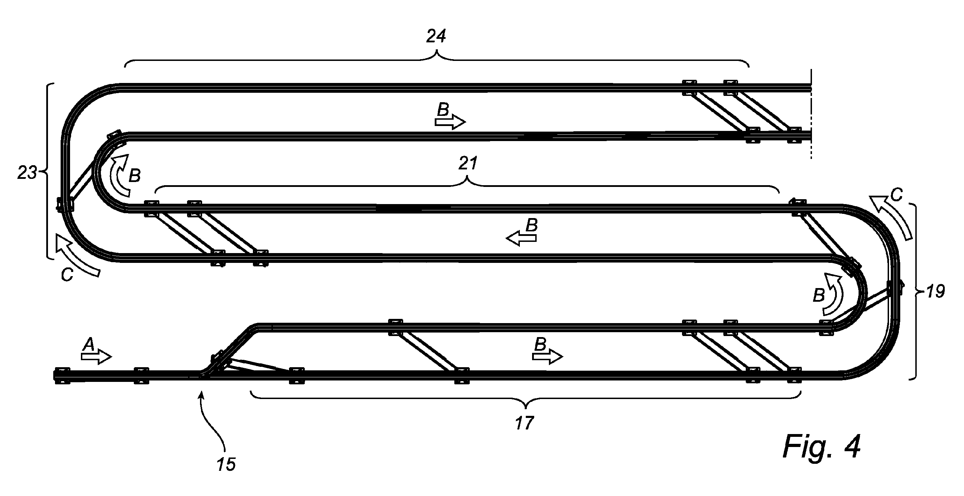

Figure 4 schematically shows the entire buffering arrangement, comprising the intersection 15 and the consecutive segments 17, 19, 21, 23 and 25 of the twin-track buffering zone.

In the described embodiment, the conveyor unit 14 is propelled by only one carriage 7a, 7b at a time throughout the twin-track buffering zone. This has the advantage that the various drive shafts do not need to be completely synchronized. However, it is realized that it may be advantageous, to propel both carriages, at least along certain portions of the buffering arrangement. For example, a drive shaft may be arranged also along the inner curve in one or both of the curved segments. Especially in the second curved segment 23, this could be easily achieved by connecting the drive shafts 22 and 26 by an additional curved drive shaft, rotating with the same speed as shafts 22 and 26.

The person skilled in the art realizes that the present invention by no means is limited to the preferred embodiments described above. On the contrary, many modifications and variations are possible within the scope of the appended claims. For example, other drive arrangements may be employed, as long as they allow for different drive speeds along different segments and tracks. Further, the order of the various segments and drive schemes may vary. For instance, it may be preferred to arrange a curve as described in figure 3 (where the second track 2b is the outer track) as the first curve. Also, the drive along the straight segments may be embodied differently, and may be adapted to the drive in the curves.

## Claims

1. A buffering arrangement for an overhead conveyor system comprising a track (2), a drive element (5) extending above and along the track (2), and a plurality of conveyor units (14) each having a front carriage (7a) and a back carriage (7b) arranged to run along the track (2), and arranged to be brought into contact with the drive element (5) in order to propel the conveyor unit (14) along the track (2) with a conveyor speed (A),
said buffering arrangement comprising a twin-track buffering zone having a first track (2a) and a second track (2b) extending along each other, and an intersection (15) with a guide (16) for guiding one carriage (7a) of each conveyor unit (14) onto said first track (2a) and another carriage (7b) of each conveyor unit (14) onto said second track (2b), said twin-track buffering zone including:
a first straight segment (17),
a first curved segment (19), wherein said first track (2a) forms an outer curve and said second track (2b) forms an inner curve,
a first drive element portion (18) arranged along said first track (2a) in said first straight conveyor segment (17), said first drive element portion (18) arranged to propel said front carriage (7a) along the first track (2a) with a buffering speed (B), thereby pulling said back carriage (7b) along the second track (2b) with said buffering speed (B), said buffering speed (B) being lower than said conveyor speed (A), and
a second drive element portion (20) arranged along said first track (2a) in said first curved conveyor segment (19), said second drive element portion (20) arranged to propel said front carriage (7a) along the first track (2a) with an accelerated speed (C), greater than said buffering speed (B), thereby pulling said back carriage along the inner curve with a speed no less than said buffering speed (B).

2. An arrangement according to claim 1, wherein said accelerated speed (C) is chosen such that said back carriage (7b) is pulled along the inner curve with a speed greater than said buffering speed (B).

3. An arrangement according to claim 1 or 2, said twin-track buffering zone further comprising:
a second curved segment (23), wherein said first track (2a) forms an inner curve and said second track (2b) forms an outer curve,
a third drive element portion (24) arranged along said second track (2b) in said second curved conveyor segment (23), said third drive element portion (24) arranged to propel said back carriage (7b) along the second track (2b) with an accelerated speed (C), thereby pushing said front carriage (7a) along the first track (2a) with a speed approximately equal to said buffering speed (B).

4. An arrangement according to claim 3, said twin-track buffering zone further comprising:
a second straight segment (21), between said first and second curved segments (19, 23), and
a fourth drive element portion (22) arranged along said first track (2a) in said second straight conveyor segment (22), said fourth drive element portion (22) arranged to propel said front carriage (7a) along the first track (2a) with said buffering speed (B), thereby pulling said back carriage (7b) along the second track (2b) with said buffering speed (B).

5. An arrangement according to any one of the preceding claims, wherein a distance between the tracks (2a, 2b) in the twin-track buffering zone is chosen such that an angle formed between the conveyor unit (14) and the track (2a, 2b) is in the range 20-60 degrees, and most preferably around 35 degrees.

6. An arrangement according to any one of the preceding claims, wherein the carriages are arranged to make frictional contact with the drive element, in order to transmit drive forces from the drive element to the carriages.

7. An arrangement according to any one of the preceding claims, wherein each drive element portion is formed by an endless drive belt, and wherein each carriage comprises a driver arranged to be brought into contact with the drive belt and propel the carriage..

8. An arrangement according to claim 6, wherein each drive element portion is formed by a rotatable shaft, and wherein each carriage comprises a driver arranged to be brought into contact with the drive shaft and propel the carriage.
